# EUROPEAN PATENT APPLICATION

(11) **EP 4 836 113 A1**
(43) Date of publication of application: **04.11.2026**
(21) Application number: 23962777.1
(22) Date of filing: 29.12.2023
(51) Int. Cl.: H01M 50/184, H01M 50/186

(54) **SECONDARY BATTERY AND ELECTRONIC DEVICE**

(71) Applicant: Dongguan Amperex Technology Limited, Dongguan City, Guangdong Province 523000 (CN)
(72) Inventor: LI, Xun, Dongguan, Guangdong 523000 (CN)
(74) Representative: Dehns Germany Partnerschaft mbB
(86) International application number: PCT/CN2023/143227
(87) International publication number: WO 2025/138101

(57) **Abstract**

This application discloses a secondary battery and an electronic device. The secondary battery includes a packaging bag and an electrode assembly accommodated in the packaging bag. The secondary battery is provided with a recess. The packaging bag is provided with a seal edge structure. The seal edge structure is provided with a first notch at the recess. The secondary battery further includes a first adhesive layer. The first adhesive layer is disposed on the seal edge structure. Viewed along a thickness direction of the secondary battery, the first adhesive layer covers at least a part of the first notch. The first adhesive layer is provided with a second notch. Viewed along the thickness direction of the secondary battery, an opening of the second notch faces an opening of the first notch. At least a part of the second notch lies within the first notch. An opening angle of the first notch is a first angle α, and an opening angle of the second notch is a second angle β, satisfying: 0° < α < β < 180°, thereby reducing tearing of the packaging bag and the leakage risk of the secondary battery.

## Description

### TECHNICAL FIELD

This application relates to the field of electrochemical technology, and in particular, to a secondary battery and an electronic device.

### BACKGROUND

As a power source for a mobile device, a lithium-ion battery is crucial for ensuring normal operation of the mobile device. Because mobile devices such as mobile phones and laptops are increasingly popularized, the operating conditions of the mobile devices are increasingly complex, thereby imposing increasingly stringent safety requirements on batteries.

During cycling of a battery, an electrode assembly thereof expands and continuously squeezes a packaging bag. For a pouch battery with an internal polygonal shape, such as an L-shaped battery, a recess structure exists on the battery. The recess is recessed into the packaging bag. The expansion of the electrode assembly keeps exerting a pulling force on the recess of the packaging bag, thereby eventually causing the recessed position to tear, and consequently resulting in leakage and failure of the battery.

### SUMMARY

Some embodiments of this application aim to provide a secondary battery and an electronic device to reduce tear at a notch position of a packaging bag of the battery, and consequently to reduce leakage-induced failure of the battery.

To solve the technical problem, some embodiments of this application put forward the following technical solution:

According to a first aspect, this application discloses a secondary battery. The secondary battery includes a packaging bag and an electrode assembly accommodated in the packaging bag. The secondary battery is provided with a recess. The packaging bag is provided with a seal edge structure. The seal edge structure is provided with a first notch at the recess. The secondary battery further includes a first adhesive layer. The first adhesive layer is disposed on the seal edge structure. Viewed along a thickness direction of the secondary battery, the first adhesive layer covers at least a part of the first notch. The first adhesive layer is provided with a second notch. Viewed along the thickness direction of the secondary battery, an opening of the second notch faces an opening of the first notch. At least a part of the second notch lies within the first notch. An opening angle of the first notch is a first angle α, and an opening angle of the second notch is a second angle β, satisfying: 0° < α < β < 180°.

In the above technical solution, the first adhesive layer can distribute stress at the first notch part of the packaging bag. The first adhesive layer can also prevent torsional deformation of the first notch part, and improve the strength and tear resistance of the first notch part, thereby reducing the risk of leakage in the secondary battery during cycling. In addition, the first adhesive layer can increase the sealing strength of the seal edge structure of the packaging bag, and effectively reduce the risk that the notch part of the packaging bag is burst open. Further, when the angle satisfies 0° < α < β < 180°, the angle of the second notch of the first adhesive layer is made larger, and the stress is distributed more uniformly in the first adhesive layer. When the electrode assembly expands, the first adhesive layer preferentially bears the stress, and is torn in place of the notch part of the packaging bag, thereby reducing the risk of leakage in the secondary battery. Moreover, when the angle satisfies β < 180°, stress is more easily distributed to the second notch of the first adhesive layer, thereby making it convenient for the first adhesive layer to preferentially bear stress. In addition, the first adhesive layer does not affect the internal space of the packaging bag, and imposes little impact on the external space of the packaging bag, thereby ensuring a relatively high energy density of the secondary battery.

In some preferred embodiments, 30° ≤ α < β ≤ 90°, thereby ensuring that the first adhesive layer bears the stress preferentially, making it more convenient for the first adhesive layer to preclude the first notch part from tearing and breaking, and also further reducing the impact of the first adhesive layer on the outline dimensions of the packaging bag.

In some preferred embodiments, the first adhesive layer includes a substrate layer and an adhesive layer stacked together. The adhesive layer is bonded between the seal edge structure and the substrate layer. The substrate layer is of relatively high tear resistance, and can reduce tearing damage to the first adhesive layer, thereby reducing damage to the first notch part of the packaging bag.

In some preferred embodiments, peel strength of the adhesive layer is a N, and a maximum cohesive force of the packaging bag is b N, satisfying: a > b, thereby enabling the adhesive layer to adhere to the packaging bag more firmly, and increasing the bonding strength between the first adhesive layer and the packaging bag.

In some preferred embodiments, a tear resistance of the substrate layer is c N. At the first notch, the tear resistance of the seal edge structure is d, satisfying: c > d, thereby improving the tear resistance of the first wall portion and/or the second wall portion, and reducing tearing damage to the first notch part of the packaging bag. Preferably, a thickness of the secondary battery is x mm, and an expansion rate of the electrode assembly is y, satisfying: c > 1.2 × d × (x/5) × (y/0.08). In this way, the tear resistance of the substrate layer is adjusted based on the thickness of the secondary battery and the collision rate of the electrode assembly, thereby reducing tearing damage to the first notch part of the packaging bag.

In some preferred embodiments, the substrate layer includes at least one of polyvinyl chloride, polyethylene terephthalate, polypropylene, polyimide, or polyethylene. Each material is well resistant to weather, heat, abrasion, and corrosion, thereby reducing the corrosion of the first adhesive layer by an electrolyte solution and increasing the lifespan of the first adhesive layer. The adhesive layer includes at least one of epoxy resin, polyurethane, or polyvinyl acetate. The adhesive layer made of the above materials can increase the lifespan of the first adhesive layer while increasing the bonding strength between the first adhesive layer and the packaging bag.

In some preferred embodiments, the seal edge structure includes a first wall portion, a second wall portion, and a connecting portion connected between the first wall portion and the second wall portion. An angle between the first wall portion and the second wall portion is a first angle α, and the first wall portion, the second wall portion, and the connecting portion jointly define and form the first notch. Viewed along the thickness direction of the secondary battery, the first adhesive layer covers and adheres to the connecting portion, at least a part of the first wall portion, and at least a part of the second wall portion. The connecting portion acts as a transition for connection between the first wall portion and the second wall portion. A part of the first adhesive layer is adhered to the connecting portion, thereby increasing the stress distribution area, reducing stress concentration, and consequently reducing tearing of the first notch part of the packaging bag.

In some preferred embodiments, the connecting portion assumes an arc shape recessed into the packaging bag. The arc-shaped structure increases the stress-bearing area, so as to distribute stress. When subjected to an external force, the arc-shaped structure can distribute the force onto a larger area, thereby reducing stress concentration at a single point or a local part. In addition, the arc-shaped structure can improve structural stability, and reduce deformation and displacement of the material subjected to a force, thereby reducing tearing of the first notch part of the packaging bag. A radius of the arc-shaped connecting portion is r mm. The first adhesive layer assumes an arc shape and adheres to the connecting portion and at least a part of the first wall portion and second wall portion. A radius of the arc-shaped first adhesive layer is R mm, satisfying: 0.6R ≤ r ≤ 0.8R. The radius of the first adhesive layer is larger, and the stress is distributed more uniformly, thereby reducing tearing of the connecting portion.

In some preferred embodiments, a distance between the centers of the first adhesive layer and the connecting portion is D mm, satisfying: 0 ≤ D ≤ 0.3, so as to maximally ensure that the center of the first adhesive layer coincides with the center of the connecting portion. This makes it convenient for the stress on each part of the connecting portion to be uniformly distributed to the second notch of the first adhesive layer, and makes it convenient for the first adhesive layer to bear the stress preferentially, thereby reducing tearing damage at the first notch of the packaging bag.

In some preferred embodiments, viewed along the thickness direction of the secondary battery, a center line of the second notch lies within the first notch, thereby ensuring that at least a half of the opening angle of the second notch of the first adhesive layer can provide cushioning and tear resistance, and consequently reducing tearing at the first notch.

In some preferred embodiments, viewed along the thickness direction of the secondary battery, an apex angle of the second notch lies within the first notch, and two base angles of the second notch lie on the seal edge structure. That the apex angle of the second notch lies within the first notch enables the more tear-resistant apex angle to preferentially resist tearing forces. At the same time, the base angles lie on the seal edge structure to improve the adhesion of the first adhesive layer to the seal edge structure, and make the first adhesive layer less prone to detachment during tearing under stress, thereby increasing the bonding strength between the first adhesive layer and the seal edge structure.

In some preferred embodiments, the apex angle of the second notch is an arc-shaped transition. The arc-shaped transition can more easily distribute stress and reduce stress concentration, thereby improving the tear resistance of the apex angle.

According to a second aspect, this application further provides an electronic device, including the secondary battery disclosed in any one of the embodiments in the first aspect described above.

The foregoing description is merely an overview of the technical solutions of this application. Some specific embodiments of this application are described below illustratively to enable a clearer understanding of the technical solutions of this application, enable implementation of the technical solutions based on the subject-matter hereof, and make the foregoing and other objectives, features, and advantages of this application more evident and comprehensible.

### BRIEF DESCRIPTION OF DRAWINGS

One or more embodiments are described illustratively with reference to corresponding drawings. The illustrative description does not constitute any limitation on the embodiments. Components marked with the same reference numeral in the drawings represent similar components. Unless otherwise expressly specified, the dimensions in the drawings do not constitute any scale limitation.
FIG. 1 is an exploded view of a secondary battery according to some embodiments of this application;
FIG. 2 is a schematic structural diagram of a secondary battery according to some embodiments of this application;
FIG. 3 is a schematic structural diagram of a first notch according to some embodiments of this application;
FIG. 4 is a close-up view of a part A shown in FIG. 2;
FIG. 5 is a schematic diagram of connection between a first adhesive layer and a sealing structure according to some embodiments of this application; and
FIG. 6 is a schematic structural diagram of a first notch according to some embodiments of this application;
FIG. 7 is a schematic diagram of a structure at a first notch according to some embodiments of this application;
FIG. 8 is a schematic diagram of a structure at a first notch according to some embodiments of this application;
FIG. 9 is a schematic diagram of a structure at a first notch according to some embodiments of this application;
FIG. 10 is a schematic structural diagram of a first adhesive layer according to some embodiments of this application;
FIG. 11 is a schematic structural diagram of a secondary battery according to some embodiments of this application; and
FIG. 12 is a schematic structural diagram of a first notch according to some embodiments of this application.

### List of reference signs:

100. secondary battery;
10. packaging bag; 11. first bag body; 111. first cavity; 12. second bag body; 101. first part; 1011. first wall portion; 102. second part; 1021. second wall portion; 103. connecting portion;
20. electrode assembly;
30. tab;
40. recess;
50. first adhesive layer; 50a. second notch; 50a1. apex angle; 50a2. base angle; 51. adhesive layer; 52. substrate layer;
60. seal edge structure; 61. top seal edge; 62. first side seal edge; 62a. first sub-side seal edge; 62b. second sub-side seal edge; 63. second side seal edge; 64. first notch;
Z. first direction; Y. second direction;
N. circle fitted to a connecting portion;
M. circle fitted to a first adhesive layer;
P. opening orientation of second notch;
Q. opening of a first notch;
S. center line of a second notch.

### DETAILED DESCRIPTION

Some embodiments of the technical solutions of this application are described in detail below with reference to the drawings. The following embodiments are merely intended as examples to describe the technical solutions of this application more clearly, but not intended to limit the protection scope of this application.

It is noted that an element referred to herein as being "fixed to" or "disposed on" another element may be directly disposed on the other element, or may be disposed on the other element with one or more elements in between. An element referred to herein as "connected to" another element may be connected to the other element directly or with one or more elements in between.

In the description of embodiments of this application, the technical terms "first" and "second" are merely intended to distinguish between different items but not intended to indicate or imply relative importance or implicitly specify the number of the indicated technical features, specific order, or order of precedence. In the description of some embodiments of this application, unless otherwise expressly specified, "a plurality of" means two or more.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. In addition, to the extent that no mutual conflict occurs, the technical features described below in different embodiments of this application may be combined with each other.

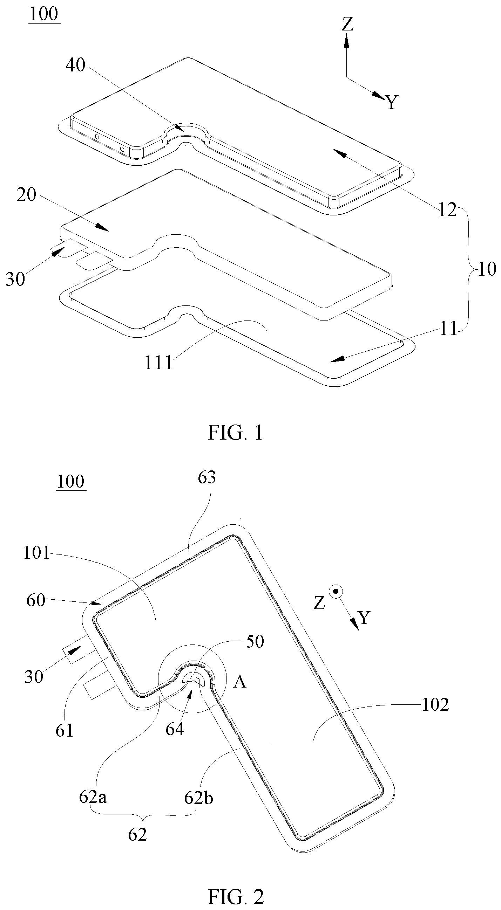

According to a first aspect, this application discloses a secondary battery 100. Referring to FIG. 1, the secondary battery 100 includes a packaging bag 10, an electrode assembly 20, and a tab 30. The packaging bag 10 serves as a mounting base and container for the remaining components of the secondary battery 100. The electrode assembly 20 is accommodated in the packaging bag 10. The electrode assembly 20 is a core element of the secondary battery 100 for implementing charging and discharging. One end of the tab 30 is electrically connected to the electrode assembly 20, and the other end extends out of the packaging bag 10. Next, using a lithium-ion battery as an example of the secondary battery 100, the specific structure of the secondary battery 100 is described. Understandably, in other embodiments of this application, the secondary battery 100 may be a sodium-ion battery or other types of secondary battery 100.

With respect to the packaging bag 10, referring to FIG. 1 and FIG. 2, the packaging bag 10 may be made of a flexible material, and serves as a mounting base, container, and external protective structure of the secondary battery 100. The packaging bag 10 defines an accommodation cavity (not shown in the figures). The accommodation cavity may be configured to accommodate an electrolyte solution (not shown in the figures) and the electrode assembly 20. For example, the packaging bag 10 includes a first bag body 11 and a second bag body 12. The first bag body 11 is provided with a first cavity 111, and the second bag body 12 is provided with a second cavity (not shown in the figures). The electrode assembly 20 may be placed inside the first cavity 111. The second bag body 12 covers the first cavity 111 of the first bag body 11, and the second cavity communicates with the first cavity 111 to form the accommodation cavity. By heat-sealing the junction between the two housings at the edges of the housings, the two housings can be bonded together to seal the accommodation cavity. The first bag body 11 and the second bag body 12 may be connected to each other or separated from each other. The second bag body 12 may be formed without a cavity, and the second bag body 12 directly covers the first cavity 111 of the first bag body 11, so that the first cavity 111 forms the accommodation cavity.

Optionally, the packaging bag 10 may assume a rectangular or trapezoidal structure, or another quadrilateral structure, or another polygonal structure. The exterior shape of the packaging bag is polygonal, and the packaging bag is made of a flexible material, enabling the bag to adapt to various spatial shapes. A polygonal pouch-type secondary battery 100 possesses advantages such as a small size, a light weight, and a high energy density in addition to superior safety performance and environmental-friendliness performance. Using an L-shaped packaging bag 10 as an example, referring to FIG. 1 to FIG. 3, observed along the first direction Z, the packaging bag 10 is roughly L-shaped. For example, the first bag body 11 and the second bag body 12 are both L-shaped. The first bag body 11 and the second bag body 12 may be combined and connected to form a complete L-shaped packaging bag 10. The packaging bag 10 includes a first part 101 and a second part 102 connected together. For example, along the second direction Y, the first part 101 and the second part 102 are arranged sequentially. The tab 30 may extend out of the packaging bag 10 from the first part 101. A recess 40 is provided between the first part 101 and the second part 102. The first part 101 and the second part 102 are bent along the recess 40, such that the packaging bag 10 as a whole assumes an L-shape. The L-shaped secondary battery 100 can adapt to a specific battery mounting space in an electronic device, and can significantly improve the energy density of the secondary battery 100 while reducing the space occupied.

Understandably, in an embodiment of this application, the packaging bag 10 assumes a structure including, but not limited to, an L-shaped structure. In other embodiments, the packaging bag 10 may assume a polygonal structure with a recess 40 such as a Z-shaped structure. The number of recesses 40 may be two, three, or more.

When the junction between the two bag bodies at the edges of bag bodies is heat-sealed, a seal edge structure 60 is formed on the exterior of the packaging bag 10. The seal edge structure 60 includes a top seal edge 61, a first side seal edge 62, and a second side seal edge 63. The top seal edge 61 is located between the first side seal edge 62 and the second side seal edge 63. The tab 30 may extend out of the first bag body 11 from the top seal edge 61. The seal edge structure 60 is provided with a first notch 64 at the recess 40. The first notch 64 may be formed at the first side seal edge 62. For example, the first side seal edge 62 includes a first sub-side seal edge 62a and a second sub-side seal edge 62b, and the first notch 64 is located between the first sub-side seal edge 62a and the second sub-side seal edge 62b.

The design of the recess 40 causes a part of the packaging bag 10, which is located at the first notch 64, to be relatively fragile. When the secondary battery 100 or an electronic device equipped with the secondary battery 100 is accidentally dropped or subjected to a collision, the first part 101 and the second part 102 of the packaging bag 10 move relative to each other or tend to move relative to each other. This easily causes bending and deformation at the first notch 64 of the packaging bag 10. Because the part of the packaging bag 10, which is located at the first notch 64, is relatively fragile, stress concentration occurs at this part, resulting in tearing damage. Consequently, the electrolyte solution leaks, or impurities such as moisture and dust enter the packaging bag 10, thereby causing failure of the secondary battery 100.

In order to reduce this risk, in an embodiment of this application, a first adhesive layer 50 may be disposed on the seal edge structure 60 of the packaging bag 10. Referring to FIG. 2 to FIG. 4, the first adhesive layer 50 is disposed on the seal edge structure 60. Viewed along the thickness direction (first direction Z) of the secondary battery, the first adhesive layer 50 covers at least a part of the first notch 64.

When the electrode assembly 20 expands in the packaging bag 10, the design of the first adhesive layer 50 can distribute stress at the first notch 64 part of the packaging bag 10. The first adhesive layer 50 can also prevent torsional deformation of the first notch part, and improve the strength and tear resistance of the first notch part, thereby reducing the risk of leakage in the secondary battery 100 during cycling. In addition, the design of the first adhesive layer 50 can increase the sealing strength of the seal edge structure 60 of the packaging bag 10, and effectively reduce the risk that the first notch 64 of the packaging bag 10 is burst open.

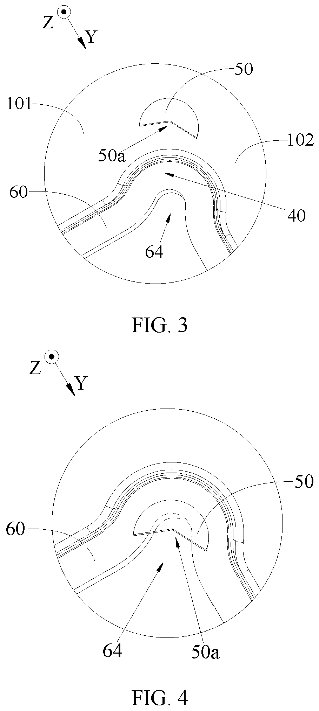

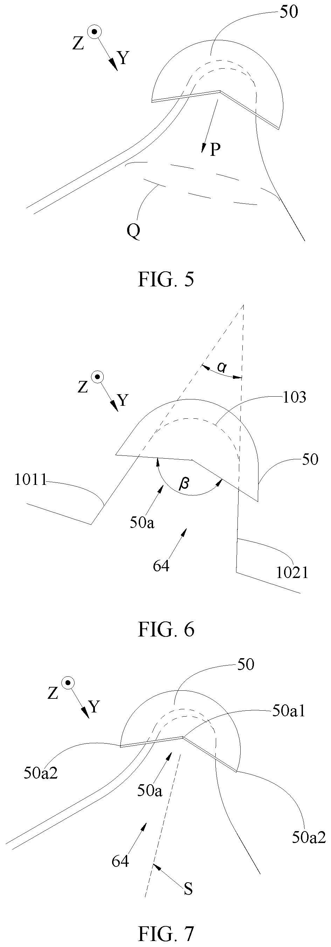

The first adhesive layer 50 is provided with a second notch 50a. Viewed along the thickness direction (first direction Z) of the secondary battery 100, an opening of the second notch 50a faces an opening Q (the dashed line part in the figure) of the first notch. As shown in FIG. 4 and FIG. 5, the opening of the second notch faces the P-direction, and the opening Q of the first notch lies in the orientation (P-direction) of the second notch. At least a part of the second notch 50a lies within the first notch 64. Still referring to FIG. 6, an opening angle of the first notch 64 is a first angle α, and an opening angle of the second notch 50a is a second angle β, satisfying: 0° < α < β < 180°. The angle between the two ends of the first adhesive layer 50 is larger, and therefore, the stress distribution is more uniform on the first adhesive layer. When the electrode assembly 20 expands, the first adhesive layer 50 preferentially bears the stress. Further, the opening angle β of the second notch 50a is less than 180°, making it easier for the stress to be distributed to the second notch 50a of the first adhesive layer 50. This allows the second notch 50a of the first adhesive layer 50 to preferentially bear the stress and tear in place of the first notch 64 part of the packaging bag 10, thereby reducing the risk of leakage in the secondary battery 100. At the same time, the first adhesive layer 50 does not affect the internal space of the secondary battery 100, and imposes little impact on the external space of the secondary battery 100, thereby ensuring a relatively high energy density of the secondary battery 100. Preferably, 30° ≤ α < β ≤ 90°, thereby ensuring that the first adhesive layer 50 bears the stress preferentially, making it more convenient for the first adhesive layer 50 to preclude the first notch 64 part from tearing and breaking, and also further reducing the impact of the first adhesive layer 50 on the outline dimensions of the packaging bag 10.

Referring to FIG. 7, in some embodiments, viewed along the thickness direction (first direction Z) of the secondary battery, a center line S of the second notch lies within the first notch 64, thereby ensuring that at least a half of the opening angle of the second notch 50a of the first adhesive layer 50 can provide cushioning and tear resistance, and consequently reducing tearing at the first notch 64.

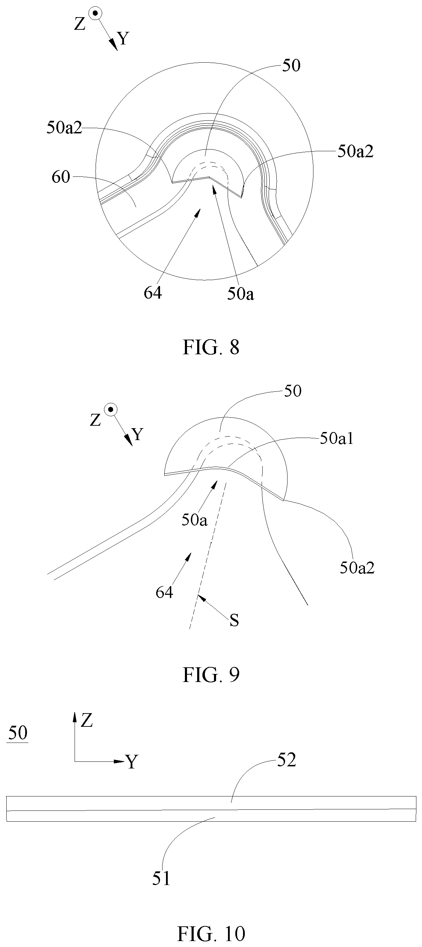

Referring to FIG. 7 and FIG. 8, viewed along the thickness direction (first direction Z) of the secondary battery, an apex angle 50a1 of the second notch 50a lies within the first notch 64, and two base angles 50a2 of the second notch 50a lie on the seal edge structure 60. That the apex angle 50a1 of the second notch 50a lies within the first notch 64 enables the more tear-resistant apex angle 50a1 to preferentially resist tearing forces. At the same time, the base angles 50a2 lie on the seal edge structure 60 to improve the adhesion of the first adhesive layer 50 to the seal edge structure 60 and make the first adhesive layer 50 less prone to detachment during tearing under stress, thereby increasing the bonding strength between the first adhesive layer 50 and the seal edge structure 60.

Further, referring to FIG. 9, the apex angle 50a1 of the second notch 50a is an arc-shaped transition. The arc-shaped transition can more easily distribute stress and reduce stress concentration, thereby improving the tear resistance of the apex angle 50a1.

Referring to FIG. 2 and FIG. 10, in some embodiments, the first adhesive layer 50 includes a substrate layer 52 and an adhesive layer 51 stacked together. The adhesive layer 51 is adhered to the seal edge structure 60. The substrate layer 52 is of relatively high tear resistance, and can reduce tearing damage to the first adhesive layer 50, thereby reducing damage to the first notch 64 part of the packaging bag 10. The adhesive layer 51 bonds the substrate layer 52 to the seal edge structure 60, thereby increasing the bonding strength between the first adhesive layer 50 and the packaging bag 10, and consequently increasing the strength of the first notch 64 part of the packaging bag 10 and reducing tearing damage at the first notch part.

With respect to the material of the substrate layer 52, optionally, the substrate layer 52 includes at least one of polyvinyl chloride, polyethylene terephthalate, polypropylene, polyimide, or polyethylene. Such materials of the substrate layer 52 are well resistant to weather, heat, abrasion, and corrosion, thereby reducing the corrosion of the first adhesive layer 50 and increasing the lifespan of the first adhesive layer 50.

With respect to the material of the adhesive layer 51, optionally, the adhesive layer 51 includes at least one of epoxy resin, polyurethane, or polyvinyl acetate. Among such materials of the adhesive layer 51, epoxy resin is a thermosetting resin with excellent mechanical properties and chemical stability, and is well resistant to corrosion and wear; the polyurethane is a polymer with a high molecular weight, and is of superior heat resistance, corrosion resistance, and electrical insulation properties; and polyvinyl acetate is of excellent flexibility and air permeability. Such materials of the adhesive layer 51 can increase the lifespan of the first adhesive layer 50 while increasing the bonding strength between the first adhesive layer 50 and the packaging bag 10.

In some embodiments, peel strength of the adhesive layer 51 is a N, and a maximum cohesive force of the packaging bag 10 is b N, satisfying: a > b, thereby enabling the adhesive layer 51 to adhere to the packaging bag 10 more firmly, and increasing the bonding strength between the first adhesive layer 50 and the packaging bag 10. The peel strength means the ability of a material to resist peeling when a peel force is applied between material surfaces, and is typically used to describe the strength of bonding of an adhesive, a coating, or a paint to a substrate. The maximum cohesive force means a maximum attractive force generated between molecules or atoms within a material, and is typically used to describe the cohesive properties of the material, that is, the bonding strength between molecules or atoms within the material. The greater the maximum cohesive force, the more significant the cohesive properties of the material, and the more difficult it is to separate or damage the material. For example, the packaging bag 10 includes a metal layer (not shown in the figure), a protective layer (not shown in the figure), and a sealing layer (not shown in the figure) that are stacked together. The protective layer covers the outer surface of the packaging bag 10. The first adhesive layer 50 is directly bonded to the protective layer of the packaging bag 10. In this embodiment, the maximum cohesive force may be considered as an adhesive force between the protective layer and the metal layer.

The peel strength between adhesive layer 51 and the packaging bag 10 is tested as follows:
The peel strength between the adhesive layer 51 and the packaging bag 10 is measured by use of a GoTech tensile machine with reference to GB/T 2792-2014 Measurement of Peel Adhesion Properties for Adhesive Tapes. The test process is as follows: discharging a secondary battery 100 until the voltage drops to 0 V, and then disassembling the secondary battery 100, taking out the adhesive layer 51 and the packaging bag 10 bonded to the adhesive layer as a whole, and wiping off the electrolyte solution on the surface using dust-free paper. Subsequently, cutting the removed part into specimens, each being 5 mm × 5 mm in size. Bonding the packaging bag side of a specimen onto a steel sheet by use of double-sided tape (Nitto 5000NS) along the length direction of the specimen. Fixing the steel sheet to a corresponding position on a GoTech tensile machine, pulling up the other end, not bonded to the packaging bag 10, of the adhesive layer in the specimen, and clamping the specimen between grips. Leaving the pulled-up part of the specimen to be at an 180° angle to the steel sheet in space. Moving the grips to pull the specimen at a speed of 1±0.2 mm/s. Ultimately, recording an average of tensile forces in a steady readout region as the peel strength between the adhesive layer and the packaging bag, denoted as a, in units of N/m.

The cohesive force of the packaging bag 10 is tested as follows:

The cohesive force of the packaging bag 10 is measured by use of a GoTech tensile machine with reference to GB/T 2792-2014 Measurement of Peel Adhesion Properties for Adhesive Tapes. The test process is as follows: discharging a secondary battery 100 until the voltage drops to 0 V, and then disassembling the secondary battery 100, taking out the packaging bag 10 containing a nylon layer and a metal layer as a whole, and wiping off the electrolyte solution on the surface using dust-free paper. Subsequently, cutting the removed part into specimens, each being 20 mm × 60 mm in size. Bonding the nylon layer side of the specimen onto a steel sheet by use of double-sided tape (Nitto 5000NS) along the length direction of the specimen, where the bonding length is not less than 40 mm. Fixing the steel sheet to a corresponding position of a GoTech tensile machine, pulling up the other end, not bonded to the nylon layer (protective layer), of the metal layer in the specimen, and clamping the specimen between grips. Leaving the pulled-up part of the specimen to be at an 180° angle to the steel sheet in space, and moving the grips to pull the specimen at a speed of 5±0.2 mm/s. Ultimately, recording the average of tensile forces in a steady readout region as the cohesive force of the packaging bag, denoted as b, in units of N/m.

Optionally, in some embodiments, a tear resistance of the substrate layer 52 is c N. At the first notch 64, the tear resistance of the seal edge structure 60 is d, satisfying: c > d, thereby improving the tear resistance of the first notch 64 part of the seal edge structure 60, and reducing tearing damage to the first notch 64.

The tear resistance is tested as follows:
The tear resistance is tested by use of a GoTech tensile machine with reference to the national standard GB/T 29847-2013. The test process is as follows: discharging a secondary battery 100 until the voltage drops to 0 V, and then disassembling the secondary battery 100, taking out the to-be-measured part as a whole, and wiping off the electrolyte solution on the surface using dust-free paper. Cutting the to-be-measured part into strip specimens of 5 mm × 50 mm, where the dimensions of the notch part needs to meet the following condition: both the length and the width are greater than or equal to 10 mm, or the diameter (of a fitted circle) is greater than or equal to 10 mm. Clamping the two sides of the specimen using grips of the GoTech tensile machine, and starting measurement after the specimen is stretched taut. Setting the stretch speed of the machine to 60 mm/min. Recording a maximum tensile force read by the machine from the start until the specimen is torn.

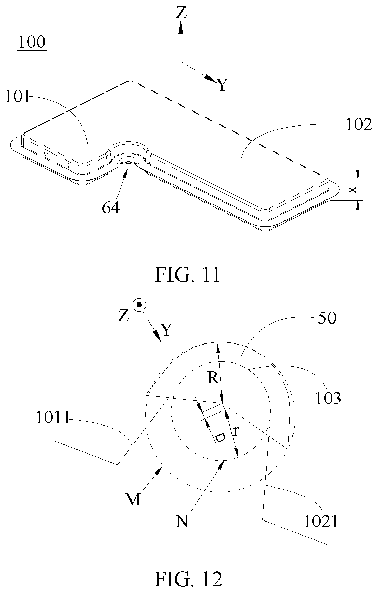

In some embodiments, referring to FIG. 11, the thickness of the secondary battery 100 in the first direction Z is x mm, and the expansion rate of the electrode assembly 20 is y, satisfying: c > 1.2 × d × (x/5) × (y/0.08). The stress on the first notch 64 is related to the force of expansion of the electrode assembly 20 during cycling. The strength or thickness of the first adhesive layer 50 required for the secondary batteries 100 that expand to different degrees (reflected in electrolyte solution or active material) is different. In this embodiment, defining c > 1.2 × d × (x/5) × (y/0.08) can improve the tear resistance at the first notch 64, and ensure a relatively high energy density of the secondary battery 100 while reducing the leakage caused by the breakage of the packaging bag 10.

The expansion rate of the electrode assembly 20 is tested as follows:
Measuring an initial thickness (mm) of the secondary battery 100 using a thickness gauge, and then charging the secondary battery at a constant current of 0.5C at 45 °C until a full-charge voltage of the system, and then charging the battery at a constant voltage until the current tapers off to 0.05C, and then discharging the battery at a constant current of 0.5C until the voltage drops to 3.0 V indicating a fully discharged state, thereby completing 1 cycle. Repeating the above operations for a total of 700 cycles. Measuring the thickness (mm) of the cycled battery using the thickness gauge. Calculating the expansion rate as: expansion rate = thickness of cycled battery (mm)/initial thickness (mm).

Referring to FIG. 6, in some embodiments, the packaging bag 10 includes a first wall portion 1011, a second wall portion 1021, and a connecting portion 103 connected between the first wall portion 1011 and the second wall portion 1021. The first wall portion 1011 is located at the first part 101, and the second wall portion 1021 is located at the second part 102. The first wall portion 1011, the second wall portion 1021, and the connecting portion 103 jointly define and form the first notch 64. The first adhesive layer 50 is adhered to the first wall portion 1011, the second wall portion 1021, and the connecting portion 103. The connecting portion 103 serves as a transition for the connection between the first wall portion 1011 and the second wall portion 1021. Viewed along the thickness direction (first direction Z) of the secondary battery 100, the first adhesive layer 50 covers and adheres to the connecting portion 103, at least a part of the first wall portion 1011, and at least a part of the second wall portion 1021, thereby increasing the stress distribution area, reducing stress concentration, and consequently reducing tearing at the first notch 64 of the packaging bag 10.

With respect to the shape of the connecting portion 103, viewed along the first direction Z, the connecting portion 103 may be configured as a straight line, a wavy line, or an arc. Taking the arc-shaped connecting portion 103 as an example, referring to FIG. 2 and FIG. 3, the connecting portion 103 is an arc shape recessed into the packaging bag 10. The arc-shaped structure increases the stress-bearing area, so as to distribute stress. When subjected to an external force, the arc-shaped structure can distribute the force onto a larger area, thereby reducing stress concentration at a single point or a local part. In addition, the arc-shaped structure can improve structural stability, and reduce deformation and displacement of the material subjected to a force, thereby reducing tearing of the first notch 64 part of the packaging bag 10.

Optionally, referring to FIG. 2, FIG. 6, and FIG. 12, viewed along the first direction Z, the radius of the arc-shaped connecting portion 103 is r mm. The first adhesive layer 50 is also arc-shaped and recessed into the packaging bag 10. The radius of the arc-shaped first adhesive layer 50 is R mm, satisfying: 0.6R ≤ r ≤ 0.8R. The radius of the first adhesive layer 50 is larger, thereby increasing the bonding area between the first adhesive layer 50 and the seal edge structure 60, distributing stress more uniformly, and consequently reducing tearing of the connecting portion 103.

The radius of the connecting portion 103 may be a radius of the connecting portion 103 itself or a radius of a circle N fitted to the connecting portion. The radius of the first adhesive layer 50 may be a radius of the first adhesive layer 50 itself or a radius of a circle M fitted to the first adhesive layer.

Optionally, in some embodiments, the shape of the first adhesive layer 50 is not limited to an arc shape that is recessed into the packaging bag 10, but may be a rectangle, a polygon, or the like.

Referring to FIG. 12, in some embodiments, a distance between the centers of the first adhesive layer 50 and the connecting portion 103 is D mm, satisfying: 0 ≤ D ≤ 0.3, so as to maximally ensure that the center of the first adhesive layer 50 coincides with the center of the connecting portion 103. In this way, the center of the first adhesive layer 50 bears stress preferentially, and the tearing of the connecting portion 103 is reduced.

In an embodiment of this application, the first adhesive layer 50 can distribute stress at the first notch 64 part of the packaging bag 10. The first adhesive layer 50 can also prevent torsional deformation of the first notch part, and improve the strength and tear resistance of the first notch part, thereby reducing the risk of leakage in the secondary battery 100 during cycling. In addition, the first adhesive layer 50 can increase the sealing strength of the seal edge structure of the packaging bag 10, and effectively reduce the risk that the notch part of the packaging bag 10 is burst open. Further, when the angle satisfies 0° < α < β < 180°, the angle between the two ends of the first adhesive layer 50 is made larger, and the stress is distributed more uniformly in the first adhesive layer. When the electrode assembly 20 expands, the first adhesive layer 50 preferentially bears the stress, and is torn in place of the notch part of the packaging bag 10, thereby reducing the risk of leakage in the secondary battery 100. Moreover, when the angle satisfies β < 180°, stress is more easily distributed to the second notch 50a of the first adhesive layer 50, thereby making it convenient for the first adhesive layer 50 to preferentially bear stress. In addition, the first adhesive layer 50 does not affect the internal space of the packaging bag 10, and imposes little impact on the external space of the packaging bag 10, thereby ensuring a relatively high energy density of the secondary battery 100.

According to a second aspect, this application further provides an electronic device, including the secondary battery 100 disclosed in any one of the embodiments in the first aspect described above. The electronic device is not particularly limited in this application, and may be any electronic device known in the prior art. For example, the electronic device includes, but is not limited to, a Bluetooth headset, a mobile phone, a tablet, a notebook computer, an electric toy, an electric tool, an electric power cart, an electric vehicle, a ship, a spacecraft, and the like. The electric toy may include stationary or mobile electric toys, such as game console, electric car toy, electric ship toy, electric airplane toy, and the like. The spacecraft may include airplane, rocket, space shuttle, spaceship, and the like.

In some embodiments of this application, a lithium-ion battery is used as an example to undergo a cycling test.

### Embodiment 1

### Preparation of a lithium-ion battery

(1) Preparation of a positive electrode plate: mixing lithium cobalt oxide (LiCoO₂) as a positive active material, conductive carbon black (super P), and polyvinylidene difluoride (PVDF) at a weight ratio of 97.5: 1.0: 1.5, adding N-methyl pyrrolidone (NMP) as a solvent, blending the mixture into a slurry with a solid content of 75 wt%, and stirring the slurry evenly. Coating one surface of 12 µm-thick positive current collector aluminum foil with the slurry evenly, and oven-drying the current collector to obtain a positive electrode plate coated with a positive active layer on a single side. Repeating the foregoing steps on the other surface of the positive current collector aluminum foil to obtain a positive electrode plate of which both sides are coated with the positive active layer. Cold-pressing and cutting the electrode plate into L-shapes for later use.
(2) Preparation of a negative electrode plate: mixing graphite as a negative active material, styrene-butadiene rubber (SBR) as a binder, and sodium carboxymethyl cellulose (CMC) as a thickener at a mass ratio of 96 : 2 : 2, and adding deionized water as a solvent to formulate a slurry in which the solid content is 70 wt%, and stirring well. Using copper foil as a negative current collector. Coating one surface of 10 µm-thick negative current collector copper foil with the slurry evenly, and oven-drying the current collector to obtain a negative electrode plate coated with a negative active layer on a single side. Repeating the above steps on the other surface of the negative current collector copper foil to obtain a negative electrode plate coated with the negative active layer on both sides. Cold-pressing and cutting the negative electrode plate into L-shapes for later use.
(3) Preparation of an electrolyte solution: mixing ethylene carbonate (EC), ethyl methyl carbonate (EMC), and diethyl carbonate (DEC) at a weight ratio of EC : EMC : DEC = 30 : 50 : 20 in an dry argon atmosphere to form a base organic solvent, then adding lithium salt hexafluorophosphate (LiPF₆) into the base organic solvent to dissolve, and mixing the solution evenly to obtain an electrolyte solution in which the mass concentration of LiPF₆ is 12.5%.
(4) Preparation of a separator: using a porous polyethylene film as a substrate layer, and coating one surface of the substrate layer with a ceramic layer (containing aluminum oxide ceramic and a PVDF binder) to form a separator (CCS), where the mass percentage of aluminum oxide ceramic in the ceramic layer is 95%.
(5) Preparation of an electrode assembly: using an aluminum sheet as a positive tab, and welding the positive tab to the aluminum foil of the positive electrode plate. Using a nickel sheet as a negative tab, and welding the negative tab directly to the copper foil of the negative electrode plate. Stacking the positive electrode plate, the separator, and the negative electrode plate alternately in sequence, and placing a separator between adjacent positive electrode plate and negative electrode plate to form an electrode assembly for later use.
(6) Preparation of a first adhesive layer: coating one surface of an 8 µm-thick substrate layer polyethylene terephthalate (PET) film with epoxy resin, and oven-drying the film at 80 °C to form a 4 µm-thick adhesive layer to obtain a first adhesive layer.
(7) Assembling of an electrode assembly: placing a stamped L-shape-recessed aluminum laminated film into an assembly fixture, and leaving the recessed side to face up. Placing the electrode assembly into the stamped recess, and disposing a low-density polyethylene sealing portion at the two tabs. Subsequently, covering the electrode assembly with another stamped recessed aluminum laminated film, and leaving the recessed side to face down. Heat-sealing the two aluminum laminated films around the perimeter by hot-pressing, so as to obtain an L-shaped recessed aluminum laminated film packaging bag, where the seal edge structure of the packaging bag forms a first notch at the recess, and the opening angle of the first notch is the first angle α, and is 60°. Adhering the first adhesive layer to the corresponding notch of the L-shaped seal edge structure, and cutting out a second notch from the first adhesive layer, where the opening of the second notch faces the opening of the first notch, and the opening angle of the first notch is the second angle β, and is 70°.
(8) Electrolyte injection and sealing: injecting an electrolyte solution into the assembled electrode assembly, and performing steps such as vacuum sealing, static standing, hot-pressing, chemical formation, and shaping to obtain a lithium-ion battery.

In Embodiments 2 to 20 and Comparative Embodiments 1 to 5, the first adhesive layer is not disposed in Comparative Embodiment 1, and the relevant data is shown in Table 1 below.

Cycling test: charging a secondary battery at a constant current of 0.5C at a normal temperature of 25 °C until a full-charge voltage of the system, and then charging the battery at a constant voltage until the current tapers off to 0.05C, and then discharging the battery at a constant current of 0.5C until the voltage drops to 3.0 V indicating a fully discharged state, thereby completing 1 cycle. Repeating the above operations for a total of 700 cycles. Measuring 100 battery specimens, and checking the tearing status at the first notch of the lithium-ion battery.

**Table 1**

| | First adhesive layer provided | First angle α | Second angle β | Percentage of specimens torn at first notch |
|---|---|---|---|---|
| Comparative Embodiment 1 | No | / | / | 28% |
| Comparative Embodiment 2 | Yes | 60° | 50° | 15% |
| Comparative Embodiment 3 | Yes | 60° | 60° | 12% |
| Comparative Embodiment 4 | Yes | 80° | 60° | 14% |
| Comparative Embodiment 5 | Yes | 100° | 100° | 11% |
| Comparative Embodiment 6 | Yes | 120° | 180° | 13% |
| Embodiment 1 | Yes | 20° | 30° | 8% |
| Embodiment 2 | Yes | 30° | 40° | 5% |
| Embodiment 3 | Yes | 30° | 60° | 4% |
| Embodiment 4 | Yes | 30° | 90° | 4% |
| Embodiment 5 | Yes | 30° | 120° | 7% |
| Embodiment 6 | Yes | 40° | 60° | 4% |
| Embodiment 7 | Yes | 50° | 60° | 5% |
| Embodiment 8 | Yes | 60° | 70° | 3% |
| Embodiment 9 | Yes | 60° | 80° | 2% |
| Embodiment 10 | Yes | 60° | 90° | 3% |
| Embodiment 11 | Yes | 60° | 100° | 6% |
| Embodiment 12 | Yes | 70° | 80° | 2% |
| Embodiment 13 | Yes | 70° | 90° | 3% |
| Embodiment 14 | Yes | 70° | 100° | 6% |
| Embodiment 15 | Yes | 80° | 90° | 4% |
| Embodiment 16 | Yes | 80° | 100° | 6% |
| Embodiment 17 | Yes | 90° | 100° | 6% |
| Embodiment 18 | Yes | 60° | 120° | 7% |
| Embodiment 19 | Yes | 60° | 150° | 7% |
| Embodiment 20 | Yes | 120° | 150° | 8% |

As can be seen from Table 1 above, with reference to Embodiments 1 to 20 and Comparative Embodiment 1, when the first adhesive layer is employed, tearing at the first notch of the packaging bag is effectively reduced. The first adhesive layer can distribute stress at the first notch part of the packaging bag. The first adhesive layer can also prevent torsional deformation of the first notch part, and improve the strength and tear resistance of the first notch part, thereby reducing the risk of leakage in the secondary battery during cycling. In addition, the first adhesive layer can increase the sealing strength of the seal edge structure of the packaging bag, and effectively reduce the risk that the notch part of the packaging bag is burst open.

In Comparative Embodiments 2 to 6, the first angle α is greater than or equal to the second angle β. This may cause the first notch to bear stress preferentially, and result in tearing at the first notch. By contrast, in Embodiments 1 to 20, the first angle α is less than the second angle β, so that the effect of reducing tearing at the notch is significantly superior to Comparative Embodiments 1 to 6. Therefore, in an embodiment of this application, α may be set to be less than β. Because the first notch needs to be recessed into the packaging bag, the first notch is inherently inclined at an angle. Therefore, the first angle α and the second angle β need to assume a specified angle, that is, the first angle α and the second angle β are not straight angles. Meanwhile, in Embodiment 13, when β is a straight angle (that is, in the absence of the second notch structure), it may be difficult to make the first adhesive layer bear stress preferentially, and the preferential stress point may always be at the first notch of the packaging bag. Therefore, this application defines 0 < α < β < 180°.

The tear reduction effect in Embodiments 2 to 4 is significantly superior to Embodiments 1 and 5. The tear reduction effect in Embodiments 6 to 10 is significantly superior to Embodiment 11. The tear reduction effect in Embodiments 12 and 13 is superior to Embodiment 16 and Embodiments 17 to 20. In Embodiments 5, 11, and 16 and Embodiments 17 to 20, β is greater than 90°. In Embodiment 1, α = 20° < 30°. With reference to Embodiments 2 to 4, Embodiments 6 to 10, and Embodiments 12 and 13, it is preferably defined that 30° ≤ α < β ≤ 90°, thereby ensuring that the first adhesive layer bears stress preferentially, making it more convenient for the first adhesive layer to preclude the first notch part from tearing and breaking, and also further reducing the impact of the first adhesive layer on the outline dimensions of the packaging bag.

The relevant test parameters in Embodiments 21 to 27 are shown in Table 2 below. For the tests of peel strength between the adhesive layer and the packaging bag and the cohesive force of the packaging bag, reference may be made to the tests described earlier above.

**Table 2**

| | Adhesive layer peel strength a (N) | Maximum cohesive force of packaging bag (N) | Percentage of specimens torn at first notch |
|---|---|---|---|
| Embodiment 21 | 8.7 | 10.3 | 7% |
| Embodiment 22 | 9.6 | 10.6 | 7% |
| Embodiment 23 | 10.7 | 10.2 | 5% |
| Embodiment 24 | 11.5 | 10.5 | 5% |
| Embodiment 25 | 12.4 | 10.9 | 4% |
| Embodiment 26 | 13.5 | 10.6 | 2% |
| Embodiment 27 | 14.6 | 10.7 | 0% |

As can be seen from Table 2 above, with reference to Embodiments 21 to 27, in Embodiments 21 and 22, the peel strength a of the adhesive layer is less than the maximum cohesive force b of the packaging bag. After a plurality of charge-discharge cycles, the bonding strength between the first adhesive layer and the packaging bag may weaken, resulting in reduced protection of the first adhesive layer for the packaging bag and a decline in the tear resistance of the packaging bag. After a plurality of cycles, the expansion and compression of the electrode assembly may cause tearing at the first notch. By contrast, in Embodiments 23 to 27, the peel strength a of the adhesive layer is greater than the maximum cohesive force b of the packaging bag. After a plurality of charge-discharge cycles, the bonding strength between the first adhesive layer and the packaging bag remains high, thereby directly improving the tear resistance at the notch. Therefore, in an embodiment of this application, a is set to be greater than b.

Tear resistance test: disassembling a finished secondary battery, and using a cutting fixture to obtain a first notch part of the packaging bag, where both the length and width of the first notch part is 10 mm. Clamping the two sides of the first notch part using grips of the GoTech tensile machine, and starting measurement after the first notch part is stretched taut. Setting the stretch speed of the machine to 60 mm/min. Recording a tensile force when the first notch part is torn. For specific methods, reference may be made to the tear resistance test described earlier above.

The relevant test parameters in Embodiments 28 to 34 are shown in Table 3 below.

**Table 3**

| | Tear resistance c of substrate layer (N) | Tear resistance d at first notch of packaging bag (N) | Percentage of specimens torn at first notch |
|---|---|---|---|
| Embodiment 28 | 48.5 | 60.8 | 8% |
| Embodiment 29 | 56.4 | 66.9 | 7% |
| Embodiment 30 | 68.7 | 62.4 | 5% |
| Embodiment 31 | 75.6 | 64.2 | 5% |
| Embodiment 32 | 80.1 | 61.5 | 3% |
| Embodiment 33 | 86.7 | 65.8 | 2% |
| Embodiment 34 | 92.4 | 62.2 | 0% |

As can be seen from Table 3 above, with reference to Embodiments 28 to 34, in Embodiments 28 and 29, the tear resistance of the substrate layer is less than that of the first and second wall portions. By contrast, in Embodiments 30 to 34, the tear resistance of the substrate layer is greater than that of the first and second wall portions. The tear reduction effect at the notch in Embodiments 30 to 34 is significantly superior to Embodiments 28 to 30. This is because the stronger tear resistance of the substrate layer improves the tear resistance at the first notch. In addition, the substrate layer preferentially bears the stress, thereby protecting the first notch and reducing tearing damage at the first notch. Therefore, in this application, c may be set to be greater than d.

Finally, it is hereby noted that the foregoing embodiments are merely intended to describe the technical solutions of this application but not to limit this application. Based on the concept of this application, the technical features in the foregoing embodiments or different embodiments may be combined, the steps may be implemented in any order, and many variations may be made to this application in different aspects, which, for brevity, are not provided in detail. Although this application has been described in detail with reference to the foregoing embodiments, a person of ordinary skill in the art understands that modifications may still be made to the technical solutions described in the foregoing embodiments, or equivalent replacements may still be made to some technical features in the technical solutions. Such modifications and replacements do not make the essence of the corresponding technical solutions depart from the scope of the technical solutions of the embodiments of this application.

## Claims

1. A secondary battery, comprising a packaging bag and an electrode assembly accommodated in the packaging bag, wherein the secondary battery is provided with a recess, the packaging bag is provided with a seal edge structure, and the seal edge structure is provided with a first notch at the recess, **characterized in that**
the secondary battery further comprises a first adhesive layer, the first adhesive layer is disposed on the seal edge structure; viewed along a thickness direction of the secondary battery, the first adhesive layer covers at least a part of the first notch;
the first adhesive layer is provided with a second notch; when viewed along the thickness direction of the secondary battery, an opening of the second notch faces an opening of the first notch, and at least a part of the second notch lies within the first notch; and
an opening angle of the first notch is a first angle α, and an opening angle of the second notch is a second angle β, satisfying: 0° < α < β < 180°.

2. The secondary battery according to claim 1, **characterized in that** 30° ≤ α < β ≤ 90°.

3. The secondary battery according to any one of claims 1 to 2, **characterized in that** the first adhesive layer comprises a substrate layer and an adhesive layer stacked together, and the adhesive layer is bonded between the seal edge structure and the substrate layer.

4. The secondary battery according to claim 3, **characterized in that** peel strength of the adhesive layer is a N, and a maximum cohesive force of the packaging bag is b N, satisfying: a > b.

5. The secondary battery according to claim 3, **characterized in that** a tear resistance of the substrate layer is c N; and
at the first notch, the tear resistance of the seal edge structure is d, satisfying: c > d.

6. The secondary battery according to any one of claims 1 to 5, **characterized in that** a thickness of the secondary battery is x mm, and an expansion rate of the electrode assembly is y, satisfying: c > 1.2 × d × (x/5) × (y/0.08).

7. The secondary battery according to claim 3, **characterized in that** the substrate layer comprises at least one of polyvinyl chloride, polyethylene terephthalate, polypropylene, polyimide, or polyethylene; and
the adhesive layer comprises at least one of epoxy resin, polyurethane, or polyvinyl acetate.

8. The secondary battery according to any one of claims 1 to 7, **characterized in that** the seal edge structure comprises a first wall portion, a second wall portion, and a connecting portion connected between the first wall portion and the second wall portion;
an angle between the first wall portion and the second wall portion is a first angle α, and the first wall portion, the second wall portion, and the connecting portion jointly define and form the first notch; and
viewed along the thickness direction of the secondary battery, the first adhesive layer covers and adheres to the connecting portion, at least a part of the first wall portion, and at least a part of the second wall portion.

9. The secondary battery according to claim 8, **characterized in that** the connecting portion assumes an arc shape recessed into the packaging bag, and a radius of the arc-shaped connecting portion is r mm; and
viewed along a thickness direction of the secondary battery, the first adhesive layer assumes an arc shape recessed into the packaging bag, and a radius of the arc-shaped first adhesive layer is R mm, satisfying: 0.6R ≤ r ≤ 0.8R.

10. The secondary battery according to claim 9, **characterized in that** a distance between the centers of the first adhesive layer and the connecting portion is D mm, satisfying: 0 ≤ D ≤ 0.3.

11. The secondary battery according to claim 1, **characterized in that**, viewed along the thickness direction of the secondary battery, a center line of the second notch lies within the first notch.

12. The secondary battery according to claim 1, **characterized in that**, viewed along the thickness direction of the secondary battery, an apex angle of the second notch lies within the first notch, and two base angles of the second notch lie on the seal edge structure.

13. The secondary battery according to claim 12, **characterized in that** the apex angle of the second notch is an arc-shaped transition.

14. An electronic device, **characterized in that** the electronic device comprises the secondary battery according to any one of claims 1 to 13.
